# EUROPEAN PATENT APPLICATION

(11) **EP 2 808 152 A1**
(43) Date of publication of application: **03.12.2014**
(21) Application number: 13002840.0
(22) Date of filing: 02.06.2013
(51) Int. Cl.: B29C 49/24, B29C 49/62, B29C 49/06

(54) **A method and a system of producing disposable container from pulp slurry containing a fiber**

(71) Applicant: Emery Silfurtun Inc, Markham Ontario L3R 2Z5 (CA)
(72) Inventor: Fridrik, Ragnar Jonsson, 101 Reykjavi (IS)
(74) Representative: Reynaldsson, Gudmundur

(57) **Abstract**

This invention relates a method and a system for producing disposable container from pulp slurry containing fiber. A wet moulded product is providing having a container like shape, which is placed into a blow mould having plurality of ventilation holes. Subsequently, a material in web form is placed into the moulded product while the moulded product is in a wet state. Finally, the material in web form is blown into the shape of the blow mould causing a simultaneous expansion of the moulded product into the shape of the blow mould.

## Description

### FIELD OF THE INVENTION

The present invention relates to a method and a system of producing disposable container from pulp slurry containing fiber, and to a disposable container obtained from such a method.

### BACKGROUND OF THE INVENTION

There is a general environmental desire to reduce the amount of waste generated, and to re-use or recycle waste materials where possible. A particular concern is the amount of material used to create packaging, and the problems associated with the recycling of packaging materials. Various different types of packaging are known for different types of product. The different types of packaging have different environmental issues associated with them, which may include issues associated with the raw materials used for the packaging - for example whether the materials are virgin or recycled, and the disposal or recycling of the packaging materials - for example whether these can be safely disposed of, recycled, or not.

EP 2 338 807 discloses a container comprising a hollow shell being made of recycled and/or biodegradable pulp material defining the container body, and a bag provided within the shell and which is secured within the hollow shell. The hollow shell is either formed as an open shell, which is folded to form the hollow shell, or is formed from plurality of separated parts, which are joined together to form the hollow shell, or from one or more flanges that are joined together to join one or more parts of the shell where one such flange may e.g. include opening to define a handle portion for holding the container.

The hollow shell is preferable formed from paper pulp formed from waste newspapers, where vacuum forming techniques similar to those used for the formation of egg boxes may be used. The moisture in the shell is subsequently dried by heating it to evaporate the moisture in the shell so as to solidify the shell.

The disclosure of EP 2 338 807 is however more or less related to various ways of attaching the bag to the hollow shell, such as by attaching the bag to the shell around the dispensing aperture of the hollow shell, by attaching the bag via tape, or via shrink wrapping where the bag is heated to shrink so as to become into contact with the outside of the shell around the dispensing opening. Further, it disclosed that the bag may be loosely arranged within the shell rather than attaching this to the inside of the shell over a large part of its area. Another alternative that is mentioned is to provide the bag loosely within the shell rather than attaching this bag to the inside of the shell over a large part of its area, since it may be difficult to attach the bag to the inside of the shell over a large area.

It is preferred, according to the disclosure in EP 2 338 807, in case the hollow shell is moulded to make it from an open shell, which is then folded to form the hollow shell. Various ways are discloses to assist the attachments or the connection of the shells, e.g. via tabs provided on slot on another part of the shell, components that provide interference fits etc., e.g. a mechanical connection between the parts, via adhesive, label, tape, or any type of mechanical connection.

The process described above is however very time demanding because the process of manufacturing the container is based on moulding components, let them dry, assembling the components together to form the outer shell, and several ways to place the bag and attach it to the outer shell. Moreover, the time for drying the moulding component(s) that form the outer shell is very time demanding and expensive and takes at least 2-5 minutes in a belt dryer and 30 to 60 seconds in a two part thermopress utilizing male and female press dies, or even more. This will obviously be reflected in too high wholesale price.

The inventor of the present invention has appreciated that there is thus a need for an improved way of producing recyclable containers such as soda bottles, bottles containing milk products, bottles containing powders and the like at a mass production level and has in consequence devised the present invention.

### SUMMARY OF THE INVENTION

It would be advantageous to achieve an improved way of manufacturing improved recyclable containers at a mass production level and which are economical favorable, and where the appearance of the containers can be similar to regular containers such as soda bottles. In general, the invention preferably seeks to mitigate, alleviate or eliminate one or more of the above mentioned disadvantages singly or in any combination. In particular, it may be seen as an object of the present invention to provide a method of producing disposable container that solves the above mentioned problems, or other problems, of the prior art.

To better address one or more of these concerns, in a first aspect of the invention a method is provided of producing disposable container from pulp slurry containing fiber, comprising:
- providing wet moulded product having a container like shape,
- placing the wet moulded product into a blow mould having plurality of ventilation holes,
- placing a material in web form into the moulded product while the moulded product is in a wet state, and
- blowing the material in web form into the shape of the blow mould causing a simultaneous expansion of the moulded product into the shape of the blow mould.

Surprisingly, such blowing of the material in web form into the shape of the blow mould while the moulded product is in wet state results in an almost instant evaporation of the moisture from the moulded product through the ventilation holes of the blow mould. This solidifies the moulded product almost instantly such that it forms the outer shell of the container and has the identical shape as inner side of the blow mould. Thus, there is no need to undergo a drying process for the moulded product, which takes at least 4 minutes, or even more, or to assembly the outer shell from several parts. At the same time, the material in web forms becomes tightly secured to the inner side of the outer shell and acts as a barrier between the material or liquid in the container and the outer shell and may e.g. form a plastic or plastic like coating, Thus, the container can be utilized as a bottle or beverage for e.g. sodas, milk products such as yogurt and any fluid or fluid like material. The container may of course also be utilized to store none fluid material such as any type of powder, nuts, confectionary and the like.

Also, the material in web form, which acts as a barrier, can be much thinner compared to e.g. regular plastic bottles because the outer shell acts as rigid structure, i.e. as a support for the barrier.

Additionally, the recycling of this container is very easy where by e.g. placing it into water the outer shell will be dissolved in the water very easily leaving the inner layer separately that can then be removed from the water and recycled.

In one embodiment, the disposable container is a bottle and where the wet moulded product has a bottle like shape. With the term bottle is e.g. meant any type of bottles containing non-alcoholic beverages such as soda, or alcoholic beverages such as wines, beers and the like.

In one embodiment, the wet moulded product has substantially the same volume and shape as the interior of the blow mould. The blow mould may be made of two (or more) parts such that it may be opened and closed when placing the moulded product when it is in a wet state into the mould. As an example, the blow mould may be made of two parts, e.g. the opposite sides of the mould, that are attached together via hinge and that may be closed together, they may be moved fully separated away from each other when placing the moulded product therein. The step of placing the moulded product when it is in a wet state into the mould may be a manual process, or it may be fully automatized process where e.g. robot arms or the like places the moulded product into the blow mould and subsequently closes the blow mould, or the blow mould may be provided or associated with a detection means that detects when the moulded product has been placed into the blow mould which then trigger an automatic closing of the blow mould.

In one embodiment, the material in web form comprises a threaded neck and a thin pocket shaped portion adapted to be inserted into the moulded product, where the material in web form is pre-heated prior to be inserted into the moulded product, where blowing the material in web form into the shape of the blow mould is performed by means of injecting highly pressured gas into the thin pocket shaped portion causing a simultaneous expansion of the thin pocket shaped portion into the shape of the blow mould forming a thin walled layer in the interior of the moulded product. The material in web form may in one embodiment be selected from High Density Polyethylene (HDPE), Low Density Polyethylene (LDPE), Polyethylene Terephtalate (PET, PETE or polyester), Polyvinyl Chloride (PVC), Polypropylene (PP), Fluorine Treated (HDPE), Post Consumer Resin (PCR), K-Resin (SBC), and Bioplastic.

The process of blowing the material in web form is well known process where it is typically pre-heated first before being inserted into the blow mould. However, what distinguished the present invention from prior art is that the material in web form is placed into the moulded product when it is a wet state.

The temperature of the blow mould may also be fully controlled, e.g. pre-heated up to a desired level before the blowing takes place, and/or it down after the blowing process has taken place.

Assuming the material in web form is e.g. PET having the threaded neck portion and a thin pocket shaped portion, the PET is pre-heated and subsequently the pocket shaped portion is placed into the moulded product when it is a wet state. A thin steel rod, nozzle, or the like, sometimes called a mandrel, may then be slid inside the pocket shaped portion where it fills the pocket shaped portion with highly pressurized gas, typically air. As a result of the pressurized air, heat and pressure, the pocket shaped portion is blown and stretched into the moulded product resulting in that the pocket shaped portion and the moulded product assume the shape of the mould, e.g. a bottle shape.

The blow mould may then be cooled relatively quickly, so that that the newly formed container is set properly, but several cooling methods may be applied, both direct and indirect, that can effectively cool the blow mould and the container. Water can be coursed through pipes surrounding the mold, which indirectly cools the blow mould and the container, but direct methods may include using pressurized air or carbon dioxide directly on the mold and the container. Once the container has cooled and set, it is ready to be removed from the blow mould.

Accordingly, the thin pocket shaped portion acting as a barrier for the container has a thickness that is only a fraction of thicknesses of e.g. regular plastic bottles, since the outer shell acts as rigid support structure for the container.

In one embodiment, the pulp slurry is a paper pulp. For example, the paper pulp may be formed from waste newspapers. In this case, the material of the moulded product is both recycled and biodegradable. The provided wet moulded product having a container like shape may be formed using e.g. vacuum forming techniques similar to those used for the formation of egg boxes. As an example, the wet moulded product may be formed from paper pulp, where the paper pulp may be a dilute material so that the can be a moulded. The-pulp mould may be in the form of e.g. a wire mesh, which is dipped into paper pulp may where a sucking force or vacuum is applied.

As already addressed, since the blowing the material in web form into the shape of the blow mould causing a simultaneous expansion of the moulded product into the shape of the blow mould results in almost instantaneous drying of the moulded product, the typical process step that is needed to solidify the moulded product forming the outer shell of the container is no longer needed, but such a drying process when e.g. when manufacturing egg boxes takes from 4 up to approximately 20 minutes. Thus, extra energy that is needed to evaporate the moisture from the moulded product is no longer required. Moreover, the drying equipment that are used for such drying process such as "pizza oven" which are both expensive and space demanding are no longer needed.

In one embodiment, the wet moulded product having a container like shape is provided by means of:
- dipping a pulp mould having a permeable moulding surface side into the pulp slurry,
- applying a vacuum to the inner side of the pulp mould to draw pulp slurry through the permeable surface side leaving an outwardly facing fiber mat on the permeable moulding outer surface side, and
- removing the pulp mould from the pulp and subsequently removing the resulting moulded product from the pulp mould.

In one embodiment, the method further comprises providing a moisture resistant covering on the outer surface of the container. This may be particularly beneficial where the container may be left in a wet or damp environment in which the structure of the container could be destroyed by moisture. For example, where the container is intended to hold a product that must be kept at a low temperature, there is the risk of condensation forming on the outside of the container if the container is moved into a warm environment. In this case, the condensation could damage the container, and in particular its structural rigidity, if the outer surface were not moisture resistant.

In a second aspect of the invention a disposable container is provided comprising an outer shell and an inner film tightly secured to the inner side of the outer shell acting as a barrier between the material or liquid in the container and the outer shell, wherein the container is produced by said method.

In a third aspect of the invention as system is provided for producing disposable container from pulp slurry containing fiber, comprising:
- a blow mould,
- means for placing a wet moulded product having a container like shape into the blow mould,
- means for placing material in web form into the moulded product while the moulded product is in a wet state, and
- a blowing mechanism for blowing the material in web form into the shape of the blow mould causing a simultaneous expansion of the moulded product into the shape of the blow mould,
wherein the blow mould comprises plurality of ventilation holes.

The means for placing a wet moulded product having a container like shape into the blow mould may be a manual process by an operator of the system, or it may be fully automatic equipment such as robot arms and the like.

The means for placing material in web form into the moulded product while the moulded product is in a wet state may also be a manual process by an operator of the system, but preferably it is a fully automatic process where a kind of a controllable grip arm and the like holds the material in web form which automatically places is into the moulded product.

A heating equipment may also be provided for pre-heating the material in web form before placing it into the blow mould, where the temperature of the material in web form and the temperature of the blow mould are fully controllable and adapted to the type of material in the web form and its characteristics (such as the thickness of the material) for enabling the above mentioned blowing of the material in the web form into the shape of the blow mould.

Moreover, in one embodiment the system is provided with a heating system for pre-heating the blow mould into a pre-defined temperature before the blowing process is initiated. Also, the system may be provided with a cooling system for cooling the blow mould and the container in the blow mould before releasing the container from the blow mould.

The blowing mechanism comprises in one embodiment a nozzle like part such as a thin steel rod or the like that is connected to a high pressured gas source, where the nozzle like part is associated to a moving mechanism that places the nozzle like part automatically inside the material in web form, where the nozzle like part operated such that it automatically fills the material in web form with highly pressurized gas resulting in that the material in web form is blown and stretched into the moulded product resulting in that the material in web form and the moulded product assume the shape of the mould.

As a result of the right pressurized air, heat and pressure, the pocket shaped portion is blown and stretched into the moulded product resulting in that the pocket shaped portion and the moulded product assume the shape of the mould, e.g. a bottle shape.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Figure 1 shows a flow diagram of a method according to the present invention for producing disposable container from pulp slurry containing fiber,
Figure 2 shows a flowchart of one embodiment of providing the wet moulded product having a container like shape,
Figure 3 depict graphically production step for manufacturing a container according to the present invention, and
Figure 4a-e depicts graphically one embodiment of the process taking place within the final-moulding station discussed in relation to figure 3, starting with placing the moulded product in wet state into a blow mould, where the blow mould comprises plurality of ventilation holes.

### DESCRIPTION OF EMBODIMENTS

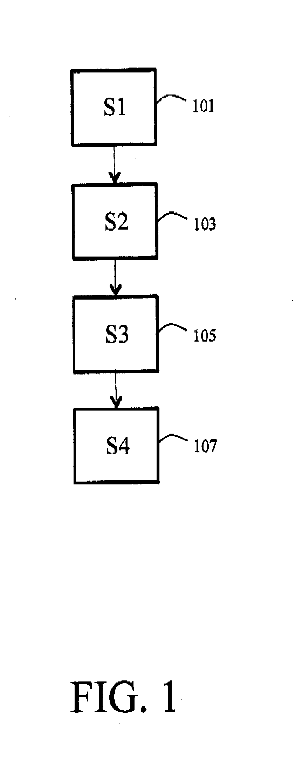

Figure 1 shows a flow diagram of a method according to the present invention for producing disposable container from pulp slurry containing fiber. The pulp slurry may, but is not limited to, be a paper pulp formed from waste newspapers and where the fibers originate from the paper.

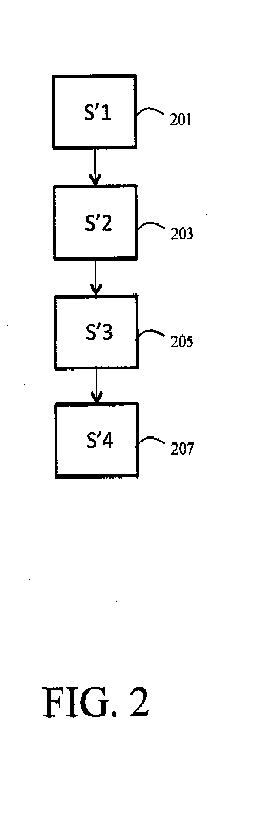

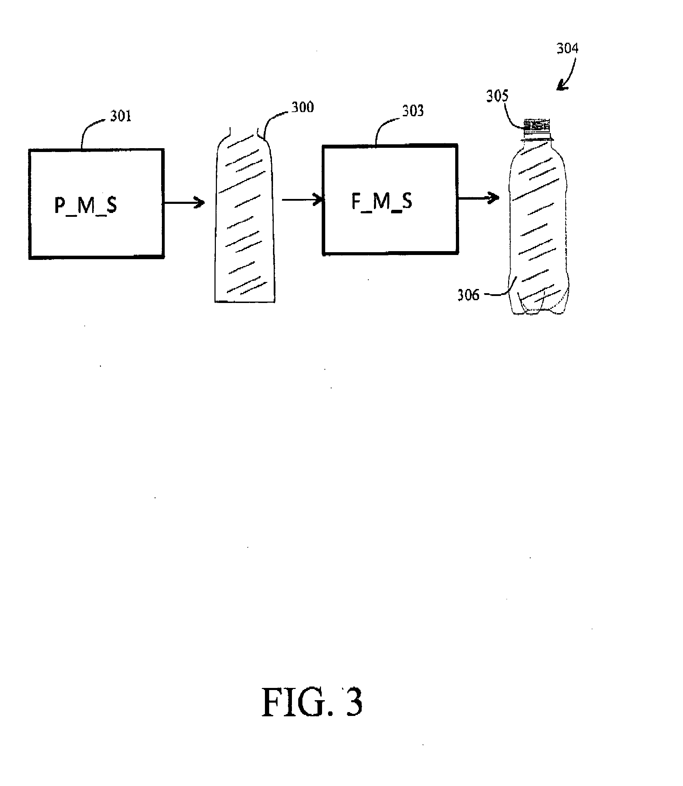

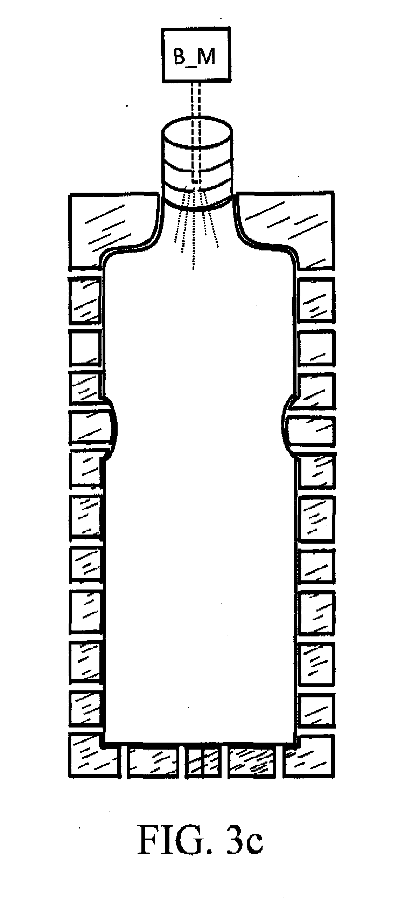

In a first step (S1) 101, a wet moulded product is provided having a container like shape. It is not an essence of the present invention how the wet moulded product is being provided, but as will be discussed in more details in relation to figures 2 and 3, this may be done using vacuum forming techniques similar to those used for the formation of egg boxes.

In a second step (S2) 103, the wet moulded product is placed into a blow mould having plurality of ventilation holes. This may in one embodiment be a fully manual or semi manual process where on operator places the moulded product in wet state into the mould, or this may be a fully automatic process where e.g. a robotic arm picks up the moulded product and puts it into the blow mould.

In a third step (S3) 105, a material in web form is placed into the moulded product while the moulded product is in a wet state. Again, this may be a manual or semi manual process, or fully automatic process where the material in web form is placed automatically into the moulded product either before the moulded product is put into the blow mould, or after it has be placed into the blow mould. In one embodiment, the material in web form is selected from, but is not limited to, High Density Polyethylene (HDPE), Low Density Polyethylene (LDPE), Polyethylene Terephthalate (PET, PETE or polyester), Polyvinyl Chloride (PVC), Polypropylene (PP), Fluorine Treated (HDPE), Post Consumer Resin (PCR), K-Resin (SBC), and Bioplastic.

The High Density Polyethylene (HDPE) is the most widely used resin for plastic bottles. This material is economical, impact resistant, and provides a good moisture barrier, HDPE is compatible with a wide range of products including acids and caustics but is not compatible with solvents. It is supplied in FDA approved food grade. HDPE is naturally translucent and flexible. The addition of color will make HDPE opaque although not glossy. HDPE lends itself readily to silk screen decoration. While HDPE provides good protection at below freezing temperatures, it cannot be used with products filled at over 160 °F (71 °C) or products requiring a hermetic (vacuum) seal.

The Low Density Polyethylene (LDPE) is similar to HDPE in composition. It is less rigid and generally less chemically resistant than HDPE, but is more translucent. LDPE is used primarily for squeeze applications. LDPE is significantly more expensive than HDPE.

The Polyethylene Terephthalate (PET, PETE or polyester) is commonly used for carbonated beverage, water bottles and many food products. PET provides very good alcohol and essential oil barrier properties, generally good chemical resistance (although acetones and ketones will attack PET) and a high degree of impact resistance and tensile strength. The orienting process serves to improve gas and moisture barrier properties and impact strength. This material does not provide resistance to very high temperature applications-max. temp. 200 °F (93 °C).

The Polyvinyl Chloride (PVC) is naturally clear, has extremely good resistance to oils, and has very low oxygen transmission. It provides an excellent barrier to most gases and its drop impact resistance is also very good. This material is chemically resistant, but it is vulnerable to solvents. PVC is an excellent choice for salad oil, mineral oil, and vinegar. It is also commonly used for shampoos and cosmetic products. PVC exhibits poor resistance to high temperatures and will distort at 160 °F (71 °C), making it incompatible with hot filled products. It has attained notoriety in recent years due to potential health risks.

The Polypropylene (PP) is used primarily for jars and closures and provides a rigid package with excellent moisture barrier. One major advantage of polypropylene is its stability at high temperatures, up to 220 °F (104 °C). Polypropylene is autoclavable and offers the potential for steam sterilization. The compatibility of PP with high filling temperatures is responsible for its use with hot fill products. PP has excellent chemical resistance, but provides poor impact resistance in cold temperatures.

The Polystyrene (PS) offers excellent clarity and stiffness at an economical cost. It is commonly used with dry products including vitamins, petroleum jellies, and spices. Styrene does not provide good barrier properties, and exhibits poor impact resistance.

The Fluorine Treated (HDPE) bottles are exposed to fluorine gas in a secondary operation, are similar in appearance to HDPE and have exceptional barrier properties to hydrocarbons and aromatic solvents. Fluorine treated bottles are excellent for use with insecticides, pesticides, herbicides, photographic chemicals, agricultural chemicals, household and industrial cleaners, electronic chemicals, medical cleaners and solvents, citrus products, d-limone, flavors, fragrances, essential oils, surfactants, polishes, additives, graffiti cleaning products, pre-emergents, stone and tile care products, waxes, paint thinner, gasoline, biodiesel, xylene, acetone, kerosene and more.

For non-bottle applications, fluorination of plastic can provide compliance with state and federal regulations. An example would be fluorination plastic fuel tanks used for lawn and garden equipment, automobiles, etc.

The Post Consumer Resin (PCR) is a blend of reclaimed natural HDPE (primarily from milk and water containers) and virgin resin. The recycled material is cleaned, ground and recompounded into uniform pellets along with prime virgin material especially designed to build up environmental stress crack resistance. PCR has no odor but exhibits a slight yellow tint in its natural state. This tint can be hidden by the addition of color. PCR is easily processed and inexpensive. However, it cannot come into direct contact with food or pharmaceutical products. PCR can be produced in a variety of recycled content percentages up to 100%.

The K-Resin (SBC) is ideally suited to a wide variety of packaging applications by virtue of its sparkling clarity, high gloss, and impact resistance. K-Resin, a styrene derivative, is easily processed on polyethylene equipment. It is suitable for packaging many products but is specifically incompatible with fats and unsaturated oils or solvents. This material is frequently used for display and point-of-purchase packaging.

The Bioplastic - polymer structures based on processed biological materials rather than petrochemicals.

In one embodiment, the material in web form comprises a threaded neck and a thin pocket shaped portion adapted to be inserted into the moulded product, where the material in web form is pre-heated prior to be inserted into the moulded product and where blowing the material in web form into the shape of the blow mould is performed by means of injecting highly pressured gas into the thin pocket shaped portion causing a simultaneous expansion of the thin pocket shaped portion into the shape of the blow mould forming a thin walled layer in the interior of the moulded product

In a fourth step (S4) 107, the material in web form in blown into the shape of the blow mould causing a simultaneous expansion of the moulded product into the shape of the blow mould. Such blowing of the material in web form into the shape of the blow mould while the moulded product is in wet state results in an almost instant evaporation of the moisture from the moulded product through the ventilation holes of the blow mould, which solidifies the moulded product almost instantly such that it forms the outer shell of the container and has the identical shape as inner side of the blow mould.

Assuming that the material in web form is PET and comprises a threaded neck and a thin pocket shaped portion, well know injection blow techniques maybe applied in step (S4), namely to pre-heat the PET above the PETs transition temperature. As an example, the PETs pre-heating temperature may be around 105°C. Subsequent to blowing the PET into the shape of the blow mould may be cooled down quickly to a temperature well below both the glass transition and softening temperatures.

The blowing may be obtained by high pressurized gas source such as a regular air compressor, where e.g. air pressure between 20-40 bar or even more is applied.

The above mentioned method steps S1-S4 take typically only few second. Moreover, no extra drying process for the moulded product is needed to form the out shell of the container that in praxis takes from 30 to 60 seconds in the case of themopressing or 2 minutes and up to 20 minutes in a belt dryer.

Figure 2 shows a flowchart of one embodiment of providing the wet moulded product having a container like shape.

In a first step (S1') 201, a pulp mould having a permeable moulding surface side is dipped into the pulp slurry.

In a second step (S2') 203, a vacuum is applied to the inner side of the pulp mould to draw pulp slurry through the permeable surface side leaving an outwardly facing fiber mat on the permeable moulding outer surface side,

In a third step (S3') 205, the pulp mould is removed from the pulp and subsequently removing the resulting moulded product from the pulp mould.

The above mentioned steps S1'-S3' may be identical to the method steps that are used for the formation of egg boxes, which is well known in the art. In this case, the moulded product is a single piece product, and where the pulp mould may e.g. contain between 20 container like shape (or less than 20 or more than 20) moulds, meaning that within few seconds 20 moulded product in wet state may be provided.

Figure 3 depict graphically production step for manufacturing a container 304 according to the present invention, starting at a pre-mould station (P_M_S) 301, which may be similar to those that are used for making formation of egg boxes, which produce the moulded product in wet state 300 having a container like shape. The output from the (P_M_S) 301 can be tens or even hundreds of such moulded product within few seconds or minutes. The fmal-moulding station (F_M_S) 303 is where the moulded products in wet state are put into the blow mould, where the material in web forms are put into the moulded products in wet state and where the blowing process discussed in relation to figure 1 takes place resulting in a container 304 having e.g. as shown here a threaded neck portion 305 and an outer shell 306.

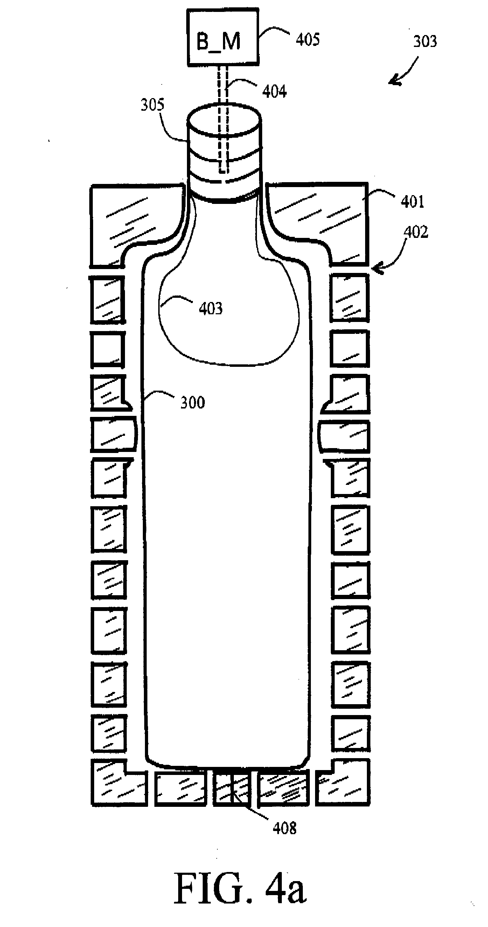

Figure 4a-e depicts graphically one embodiment of the process taking place within the final-moulding station 303 discussed in relation to figure 3, starting with placing the moulded product 300 in wet state into a blow mould 401, where the blow mould 401 comprises plurality of ventilation holes 402. As shown here, the blow mould is made of two parts (could of course be more than two parts) that are moved away from each other when placing the moulded product in wet state therein. As already discussed, this may be done manually or semi-manually, or be fully automatized where e.g. robotic arms and the like are used to transfer the moulded product 300 into the blow mould. Subsequently, the two blow mould parts moved to a closed position as indicated by the arrow.

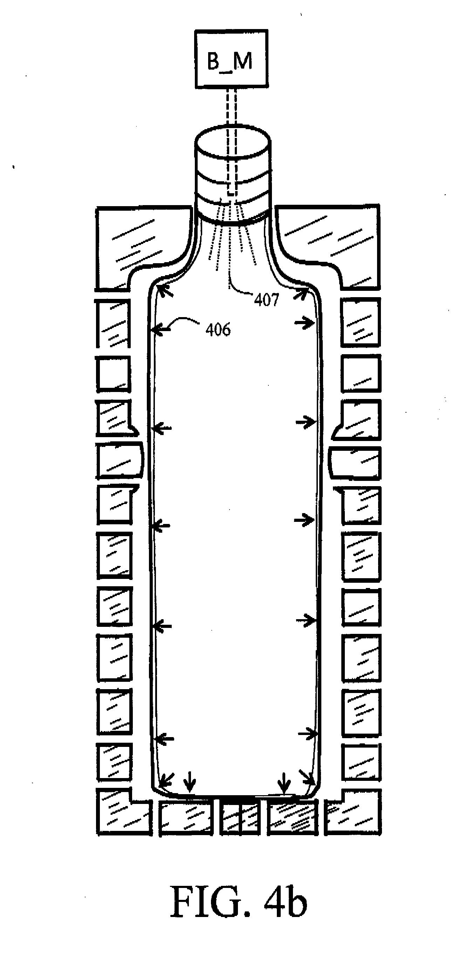

Figure 4b shown the blow mould 401 in a closed position, and where a material in web form has been put into the moulded product 300 when it is still in a wet state. As depicted in this embodiment, the material in web form comprises a threaded neck 305 and a thin pocket shaped portion 403. Moreover, the material in web form is pre-heated via a heating source (not shown) before blowing the pocket shaped portion 403 into the shape of the mould.

The blowing process may be performed by a blowing mechanism (B_M) 405 comprising a nozzle 404, and which in one embodiment comprises an extruder barrel and screw assembly (not shown), which melts the material in web form, e.g. a polymer. This pre-heating process typically takes place before the material in web form is placed into the moulded material 300. As shown here, the nozzle 404 has been moved e.g. in an automatic way into the material in web form, e.g. the molten polymer.

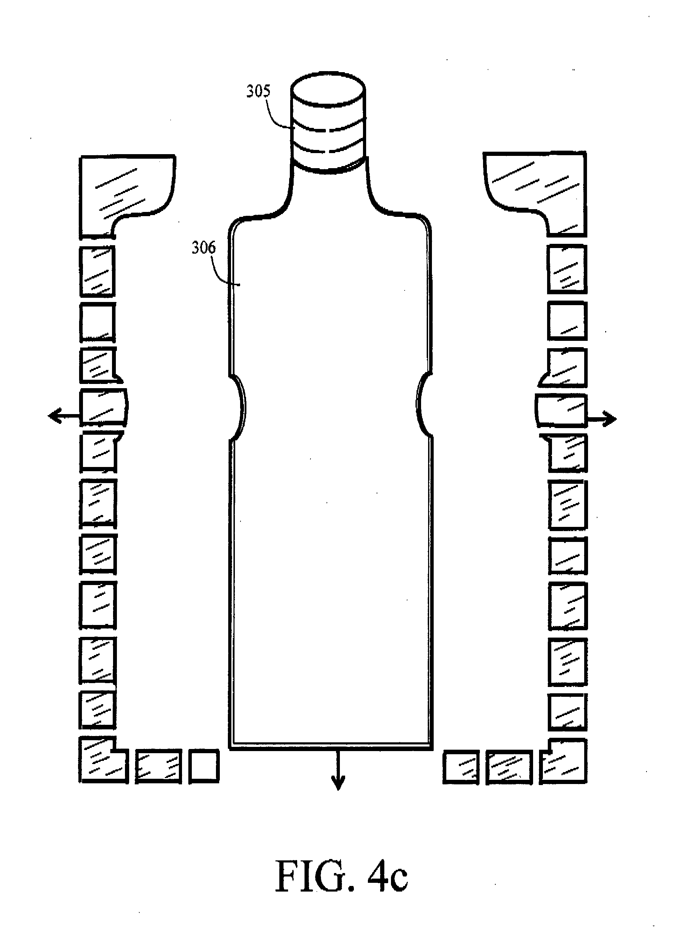

Figure 4c shows where highly pressurized gas 407 is injected into the pocket shaped portion 403 causing an instant expansion of the pocket shaped portion 403, and where the pocket shaped portion 403 exerts simultaneously with an outwardly pointing force as indicated by the arrows 406 onto the inner side of the moulded product The pressure of the gas, which typically is air, may be in the range of 20-40 bar or even more. This may depend on the temperature of the material in web form, and/or the thickness of the material in web form, in the case the thickness of the bag shaped portion 403.

Figure 4d shows where the moulded product and the pocket shaped portion have taken the shape of the mould 401. The ventilation holes 402 act as access channels for the moisture in the moulded product, where via these channels 402 and the temperature of the material in web form results in an immediate drying of the moulded product such that it forms an outer supporting shell 306 for the container and where the material in web form, in this case the pocket shape portions, acts as a barrier between the beverage/material to be contained in the container and the outer shell.

Figure 4e shows, typically after the container has been cooled down via appropriate cooling mechanism (not shown here) that is well known in the art, where the two blow mould parts 401 move apart and where e.g. the resulting container may via gravity fall down onto e.g. a take-away conveyor means and the like.

Also, as depicted here the thin pocket shaped portion acting as a barrier for the container has a thickness that is only a fraction of thicknesses of e.g. regular plastic bottles, where the thickness may be only a fraction of a millimeter because the outer shell acts as rigid support structure for the container.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A method of producing disposable container from pulp slurry containing fiber, comprising;
• providing wet moulded product having a container like shape,
• placing the wet moulded product into a blow mould having plurality of ventilation holes,
• placing a material in web form into the moulded product while the moulded product is in a wet state, and
• blowing the material in web form into the shape of the blow mould causing a simultaneous expansion of the moulded product into the shape of the blow mould.

2. A method according to claim 1, wherein the disposable container is a bottle and where the wet moulded product has a bottle like shape.

3. A method according to claim 1 or 2, wherein the wet moulded product has substantially the same volume and shape as the interior of the blow mould.

4. A method according to any of the preceding claims, wherein the material in web form comprises a threaded neck and a thin pocket shaped portion adapted to be inserted into the moulded product, where the material in web form is pre-heated prior to be inserted into the moulded product, where blowing the material in web form into the shape of the blow mould is performed by means of injecting highly pressured gas into the thin pocket shaped portion causing a simultaneous expansion of the thin pocket shaped portion into the shape of the blow mould forming a thin walled layer in the interior of the moulded product.

5. A method according to any of the preceding claims, wherein the material in web form is selected from High Density Polyethylene (HDPE), Low Density Polyethylene (LDPE), Polyethylene Terephthalate (PET, PETE or polyester), Polyvinyl Chloride (PVC), Polypropylene (PP), Fluorine Treated (HDPE), Post Consumer Resin (PCR), K-Resin (SBC), and Bioplastic.

6. A method according to any of the preceding claims, wherein the pulp slurry is a paper pulp.

7. A method according to any of the preceding claims, wherein the wet moulded product having a container like shape is provided by means of:
• dipping a pulp mould having a permeable moulding surface side into the pulp slurry,
• applying a vacuum to the inner side of the pulp mould to draw pulp slurry through the permeable surface side leaving an outwardly facing fiber mat on the permeable moulding outer surface side, and
• removing the pulp mould from the pulp and subsequently removing the resulting moulded product from the pulp mould.

8. A method according to any of the preceding claims, further comprising providing a moisture resistant covering on the outer surface of the container.

9. A disposable container comprising an outer shell and an inner film tightly secured to the inner side of the outer shell acting as a barrier between the material or liquid in the container and the outer shell, wherein the container is produced by a method according to any of the claims 1-8.

10. A system for producing disposable container from pulp slurry containing fiber, comprising:
• a blow mould,
• means for placing a wet moulded product having a container like shape into the blow mould,
• means for placing material in web form into the moulded product while the moulded product is in a wet state, and
• a blowing mechanism for blowing the material in web form into the shape of the blow mould causing a simultaneous expansion of the moulded product into the shape of the blow mould,
wherein the blow mould comprises plurality of ventilation holes.
